Europäisches Patentamt

European Patent Office

Office européen des brevets

(19)

(11) Veröffentlichungsnummer: **0 057 824**
**B1**

(12) # EUROPÄISCHE PATENTSCHRIFT

(45) Veröffentlichungstag der Patentschrift:
15.10.86

(21) Anmeldenummer: **82100266.4**

(22) Anmeldetag: **15.01.82**

(51) Int. Cl.⁴: **B 60 R 9/10**

(54) Universal-Halter zum Transport eines Fahrrades auf einem Autodachträger.

(30) Priorität: **10.02.81 DE 3104652**

(43) Veröffentlichungstag der Anmeldung:
**18.08.82 Patentblatt 82/33**

(45) Bekanntmachung des Hinweises auf die Patenterteilung:
**15.10.86 Patentblatt 86/42**

(84) Benannte Vertragsstaaten:
**AT BE CH DE FR GB IT LI LU NL SE**

(56) Entgegenhaltungen:
**AT-B-358 937**
**DE-U-7 820 749**
**DE-U-8 103 486**
**FR-A-1 518 528**

(73) Patentinhaber: **Tittel, Eberhard, Lagerstrasse 1,
D-7981 Grünkraut- Gullen (DE)**

(72) Erfinder: **Tittel, Eberhard, Lagerstrasse 1, D-7981
Grünkraut- Gullen (DE)**

(74) Vertreter: **Schmidt- Evers, Jürgen, Dipl.- Ing.,
Patentanwälte Dipl.- Ing. H. Mitscherlich Dipl.-
Ing. K. Gunschmann Dipl.- Ing. Dr.rer.nat. W.
Körber Dipl.- Ing. J. Schmidt- Evers Dipl.- Ing.
W. Melzer Steinsdorfstrasse 10, D-8000 München
22 (DE)**

## Beschreibung

Die Erfindung betrifft einen Fahrrad-Träger, der auf an einem Autodach zu befestigenden Querbügeln anzubringen ist, bestehend aus mindestens einem mittels Verbindungselementen an den Querbügeln zu befestigenden Längsteil, einer Führung für jedes Rad des Fahrrades an dem Längsteil und einer an dem Längsteil zu befestigenden Stütze, welche sich im befestigten Zustand in einer durch das Längsteil verlanfenden Ebene nach oben erstrecht und die zwischen Lenkkopf und Tretlager des Fahrrades verlaufende Fahrrad-Rahmenstange gabelförmig einfaßt.

Ein derartiger Fahrrad-Träger ist bekannt (AT-A- 358 937). Bei diesem bekannten Fahrrad-Träger ist die Stütze von einer Schiene mit U-Profil gebildet, deren U-Profilgrund in der oberen Hälfte entfernt ist, so daß die beiden U-Profil-Schenkel einen freien Raum zwischen sich einschließen, in den die sich zwischen Lenkkopf und Tretlager des Fahrrades erstreckende Fahrrad-Rahmenstange einführbar ist. Die beiden U-Profil-Schenkel vermögen das Fahrrad jedoch nur seitlich zu stützen, und dies auch nur mit Spiel. Es ist deshalb erforderlich, die Räder noch in den Führungen am Längsteil zu befestigen. Damit ist jedoch noch nicht ausgeschlossen, daß das Fahrrad durch das für ein leichtes Einführen notwendige Spiel zwischen den U-Profil-Schenkeln der Stütze und der zwischen diesen verlaufenden Fahrrad-Rahmenstange bei fahrendem Auto seitlich hin- und herschlägt, wodurch nicht nur ein unerwünschtes Klappern entsteht, sondern auch der Lack an der Fahrrad-Rahmenstange beschädigt wird.

Bekannt ist ferner ein Fahrrad-Träger (FR-A-1.518.528), bei dem die Stütze von einem Winkelglied gebildet ist, dessen einer Winkelschenkel seitlich an dem Längsglied befestigt ist und sich parallel zu den Querbügeln erstreckt, und dessen anderer Winkel nach oben ragt und an seinem oberen Ende eine Klaue aufweist, die mit ihrer Öffnung quer zur Fahrtrichtung gerichtet ist. In diese Klaue kann eine Fahrrad-Rahmenstange seitlich eingeführt und am Klauengrund mit Befestigungsmitteln festgehalten werden. Ein Festlegen der Räder am Längsteil ist dadurch entbehrlich. Durch den sich seitlich erstreckenden Winkelschenkel des die Stütze bildenden Winkelgliedes ist hier allerdings ein seitlicher Platzbedarf erforderlich, der der Anordnung einer möglichst großen Zahl von Längsteilen auf den Querbügeln, d. h. der Unterbringung möglichst mehrerer Fahrräder auf dem Dach des Autos entgegensteht. Außerdem muß jedes Fahrrad beim Aufsetzen auf das Längsteil so lange festgehalten werden, bis die betreffende Fahrrad-Rahmenstange in der Klaue mit den Befestigungsmitteln festgelegt ist. Für die Betätigung der Befestigungsmittel, die in der Regel Riemen sind, benötigt man jedoch beide Hände.

Der Erfindung liegt die Aufgabe zugrunde, einen Fahrrad-Träger der eingangs beschriebenen Art dahingehend weiterzubilden, daß ein aufgesetztes Fahrrad einerseits gegen seitliche Bewegung gesichert und ein Festlegen der Räder an dem Längsteil nicht unbedingt notwendig ist, und andererseits, daß das Aufsetzen und Festlegen so erfolgen kann, daß das Fahrrad während der Befestigung nicht mit den Händen gehalten werden muß.

Die Aufgabe ist erfindungsgemäß dadurch gelöst, daß die Stütze an ihrem oberen Ende mit einer Klaue versehen ist, die mit ihrer Öffnung in Fahrt- oder Gegenfahrtrichtung schräg nach oben gerichtet ist, derart, daß sich die erwähnte Fahrrad-Rahmenstange in den Klauengrund einlegen kann, und daß an der Klaue Befestigungsmittel zum Festhalten der Fahrrad-Rahmenstange in der Klaue vorgesehen sind.

Nach dem Aufsetzen eines Fahrrades auf den erfindungsgemäßen Fahrrad-Träger braucht das Fahrrad nicht mehr mit den Händen festgehalten werden, da sich die erwähnte Fahrrad-Rahmenstange in den Grund der Klaue einlegt und von dieser gegen ein seitliches Umfallen gehalten wird. Es stehen dann beide Hände zum Betätigen der Befestigungsmittel zur Verfügung, mit denen die Fahrrad-Rahmenstange in der Klaue arretiert wird. Die Klaue stützt das Fahrrad dadurch nicht nur seitlich, sondern zusammen mit den Befestigungsmitteln nimmt sie auch in Fahrt- und Gegenfahrtrichtung wirkende Beschleunigungs- und Verzögerungskräfte auf. Ein Klappern der Fahrrad-Rahmenstange in der Klaue ist ausgeschlossen, ebenso wie eine Beschädigung des Lackes. Dadurch, daß die Stütze in einer durch das Längsteil verlaufenden senkrechten Ebene liegt, können mehrere Längsteile auf den Querbügeln so angebracht werden, daß eine durch den Pedalabstand bestimmte dichtest mögliche Packung von Fahrrädern auf dem Autodach gewährleistet ist.

Zu den Befestigungsmitteln zum Festhalten der Fahrrad-Rahmenstange in der Klaue können ein Sicherungsstift und/ oder ein in einer Öse gehaltener Riemen gehören.

Die Stütze kann an ihrem unteren Ende eine U-förmige Schelle aufweisen, die das Längsteil umfaßt, wobei die Schelle mit einer Spannschraube versehen ist, mittels welcher die Schelle auf dem Längsteil kipp- und verschiebungsfest arretierbar ist. Durch Lösen der Spannschraube ist eine Längsverschiebung der Stütze auf dem Längsteil möglich. Dies ist insbesondere bei mehreren auf den Querbügeln angeordneten Längsteilen und daran befestigten Stützen vorteilhaft, weil dann die Stützen jeweils zweier nebeneinanderliegender Längsteile in Längsrichtung der Längsteile gegeneinander versetzt werden können, um ein Zusammenstoßen der Pedale nebeneinander befindlicher Fahrräder zu vermeiden. Daneben ist noch möglich, die Stützen so auf den Längsteilen zu befestigen, daß die Klauen nebeneinaderliegender Stützen in entgegengesetzte Richtungen weisen.

Um den Fahrrad-Träger an verschiedene Fahrradgrößen anpassen zu können, wird gemäß einer Weiterbildung der Erfindung vorgeschlagen, daß wenigstens die Führung für das Hinterrad oder die Führung für das Vorderrad auf dem Längsteil in Längsrichtung verschiebbar ist.

Weitere Erläuterungen der Erfindung werden nachfolgend an hand der Beschreibung der beigefügten Figuren gegeben.

Fig. 1 zeigt in perspektischer Darstellung verschiedene Möglichkeiten der Anbringung eines oder mehrerer erfindungsgemäßer Halter an den Querbügeln eines Autodachträgers.

Fig. 2 zeigt in Seitenansicht einen erfindungsgemäßen Halter.

Fig. 3 zeigt den erfindungsgemäßen Halter nach Fig. 2 in Aufsicht.

Fig. 4 und 5 zeigen das obere Ende der Stütze in zwei zueinander senkrechten Ansichten.

Fig. 6 zeigt eine erste Ausführungsform einer Doppelschelle und

Fig. 7 und 8 zeigen zwei zueinander orthogonale Ansichten einer zweiten Ausführungsform einer Doppelschelle des erfindungsgemäßen Halters.

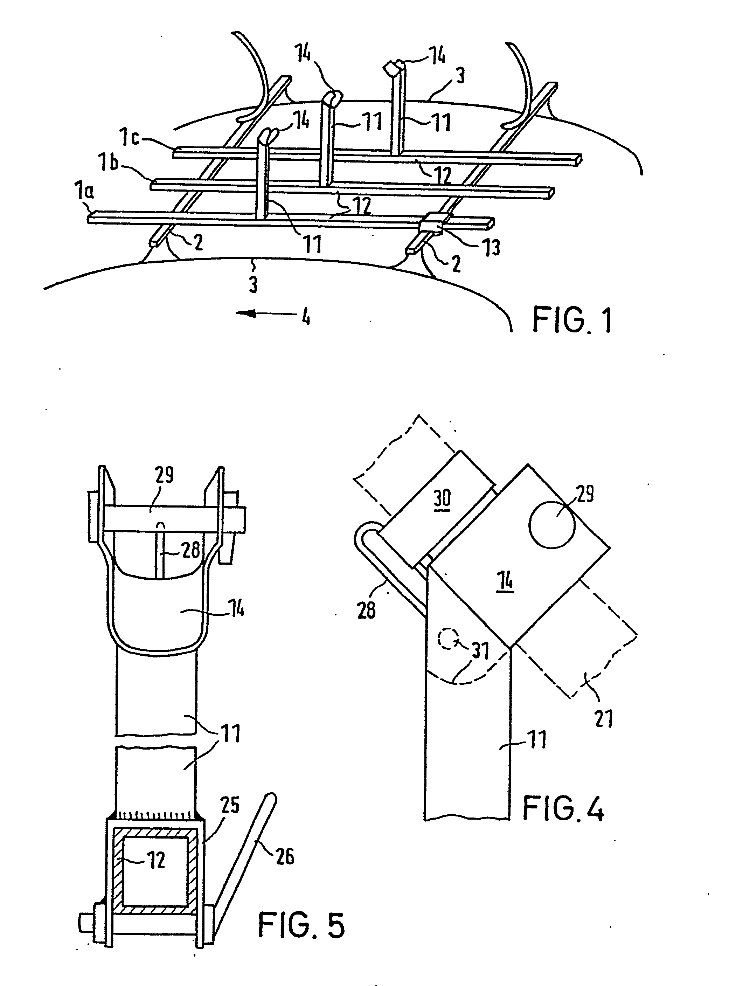

Figur 1 zeigt jeweils mit 1 bezeichnet einen erfindungsgemäßen Halter, wobei die Indices a, b und c auf drei zueinander verschiedene Anordnungen derselben am Dachträger hinweisen. Mit 2 sind zwei Querbügel eines Autodachträgers bekannter Art bezeichnet. Das Bezugzeichen 3 weist auf den Rand des nicht weiter ins einzelne gehend dargestellten Autodaches hin, wobei bei diesem Beispiel diese Querbügel wie im Regelfall an diesen Dachrändern 3 an der Regenleiste befestigt angebracht sind. Der Pfeil 4 weist auf die Fahrtrichtung des Fahrzeugs hin.

Mit 11 sind in prinzipieller Darstellung die an den Stangen 12 zu befestigenden Stützen bezeichnet. Mit 13 ist auf eine Doppelschelle hingewiesen, mit der Querbügel 2 und Stange 12 an ihrem jeweiligen Kreuzungspunkt miteinander zu verbinden sind. Solche Doppelschellen 13 sind an allen sechs in der Figur 1 vorhandenen Kreuzungspunkten von jeweiliger Stange 12 mit jeweiligem Querbügel 2 vorgesehen, obwohl der Übersichtlichkeit halber nur diese eine Doppelschelle 13 in Fig. 1 angedeutet ist.

Aus Fig. 1 ist zu ersehen, wie Halter 1a und Halter 1b parallel zur Fahrtrichtung 4 zueinander versetzt angeordnet sind, so daß die Stütze 11 des Halters 1a vergleichsweise zur Stütze 11 des Halters 1b in Fahrrichtung weiter vorn liegt und sich damit das (in Fig. 1 nicht dargestellte) Fahrrad im Halter 1a gegenüber dem Fahrrad im Halter 1b weiter vorn befindet, so daß sich die Lenkstangen dieser beiden benachbarten Fahrräder nicht gegenseitig stören. Bezüglich der Anbringung der beiden Halter 1b und 1c ist der Unterschied dargestellt, daß die Klaue 14 der Stütze 11 des Halters 1c (bezogen auf die Fahrtrichtung 4) nach vorn und damit in Gegenrichtung zur Klaue 14 der Stütze 11 des Halters 1b (und zur Klaue 14 der Stütze 11 des Halters 1a) weist. Ein im Halter 1c zu befestigendes Fahrrad weist mit seinem Vorderrad bezogen auf das Auto nach hinten. Auch bei dieser Anordnung der Halter 1b und 1c bzw. der Stützen 11 dieser beiden Halter 1b und 1c zueinander stören sich die Lenkstangen zweier benachbarter Fahrräder dementsprechend nicht.

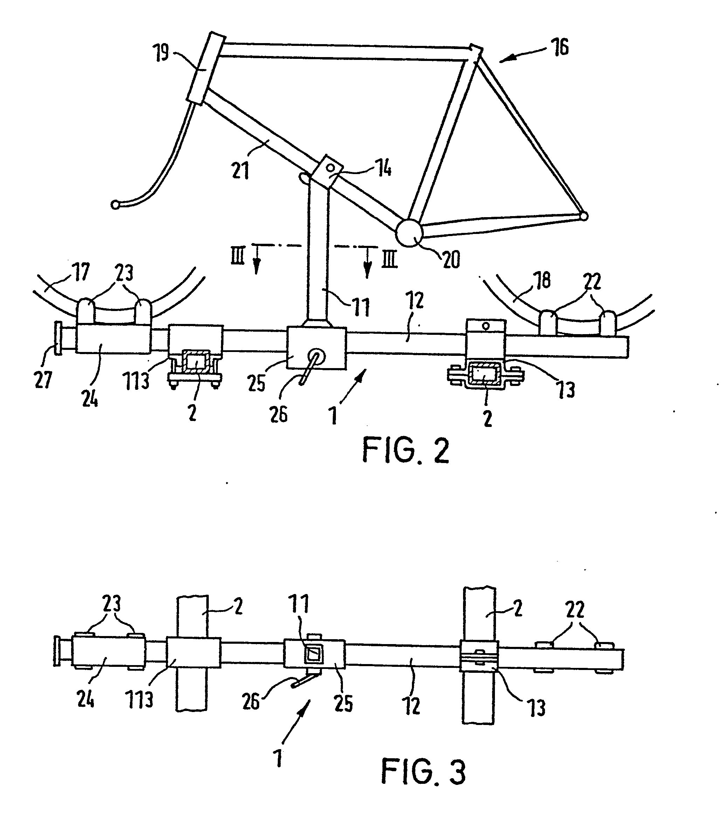

Figur 2 zeigt in Seitenansicht in vergrößerter und mehr ins Detail gehender Darstellung einen erfindungsgemäßen Halter 1 mit seiner Stange 12 und seiner Stütze 11, an der sich die Klaue 14 befindet. Mit 13 und 113 sind zwei wahlweise verwendbare unterschiedliche Ausführungsformen der Doppelschelle bezeichnet, mit denen die Stange 12 an dem jeweiligen Querbügel 2 zu befestigen ist, wobei diese Querbügel 2 als Schnitt mit einer vor der Stange 12 liegenden Schnittebene wiedergegeben sind. Auf die erwähnten verschiedenen Ausführungsformen der Doppelschellen 13 und 113 wird nach nachfolgend näher eingegangen. Mit 16 ist auf das nur als Fragment und skizzenhaft dargestellte Fahrrad hingewiesen, dessen Vorderrad mit 17, dessen Hinterrad mit 18 und dessen zwischen Lenkkopf 19 und Tretlager 20 sich erstreckende Rahmenstange mit 21 bezeichnet ist. Das Hinterrad 18 steht in zwei Führungen 22, die in bekannter Weise aus je zwei nach oben gerichteten Laschen bestehen. Die beiden Führungen 23 für das Vorderrad 17 sind wieder je zwei Laschen, die hier jedoch an einem Rohrstück 24 befestigt sind, das sich weitgehend spielfrei auf der Stange 12 in Längsrichtung verschieben läßt, nämlich um den Abstand der Führungen 22 und 23 voneinander an den Abstand zwischen Vorderrad 17 und Hinterrad 18 jeweils anpassen zu können. Mit Rücksicht auf die bei der Erfindung vorgesehene Befestigung des Fahrrades am erfindungsgemäßen Halter ist eine Arretierung für das Rohrstück 24 und die Führung 23 entbehrlich. Vorteilhafterweise wird das Vorderrad 17 am Rohrstück 24 und das Hinterrad 18 an der Stange 12 beispielsweise mit je einem Riemen befestigt.

Die Stütze 11 umfaßt außer der an ihr fest angebrachten Klaue 14 auch die an ihr fest angebrachte Schelle 25, die die Stange 12 des Halters 1 eng umschließt. Diese einseitig offene Schelle 25 ist mit einer Spannschraube 26 zuzuspannen, so daß die Stütze 11 mittels der Schelle 25 fest und unverrückbar mit der Stange 12 zu verbinden ist. Durch Lösen der Spannschraube kann die Stütze 11 jedoch auf der Stange 12 wieder verschoben und neu angepaßt werden, z. B. an eine andere jeweilige Abmessung zwischen Hinterrad 18 und Rahmenstange 21 eines anderen Fahrrades. Der Vollständigkeit halber sei aber darauf hingewiesen, daß die Ausführungsform eines erfindungsgemäßen Halters auch derart sein kann, daß die Stütze 11 an der Stange 12 fest angebracht, z. B. angeschweißt ist und für das Hinterrad 18 eine ebensolche Führung vorgesehen ist, wie sie mit 23 und 24 für das Vorderrad 17 in der Fig. 1 dargestellt ist. Mit einer solchen Ausführungsform läßt sich der erfindungsgemäße Halter ebenfalls an individuelle Abmessungen eines jeweiligen Fahrrades anpassen.

Fig. 3 zeigt eine Aufsicht auf einen erfindungsgemäßen Halter 1, wobei in Fig. 3 die nach oben ragende Stütze 11 entsprechend dem Schnitt III-III nach Fig. 2 geschnitten ist. Bereits zu den Figuren 1 und 2 erläuterte Einzelheiten haben in Fig. 3 dieselben Bezugszeichen und bedürfen daher keiner weiteren Erläuterung. Von den Querbügeln 2 sind nur Teilstücke dargestellt. Das vorzugsweise abnehmbare Endstück 27, z. B. ein Kunststoffstopfen der in das die Stange 12 bildende Rohr hereingesteckt ist, dient dazu, daß die auf der Stange 12 verschiebbaren Teile, nämlich das Rohrstück 24 und die Schellen 113, 13 sowie die Stütze 11 mit ihrer Schelle 25, soweit diese Schellen nicht festgespannt sind, nicht unerwünschterweise von der Stange 12 abrutschen und verloren gehen können. Soweit die Führungen 22 an der Stange 12 fest angebracht, z. B. angeschweißt sind, kann dort auf ein entsprechendes Endstück 27 verzichtet werden.

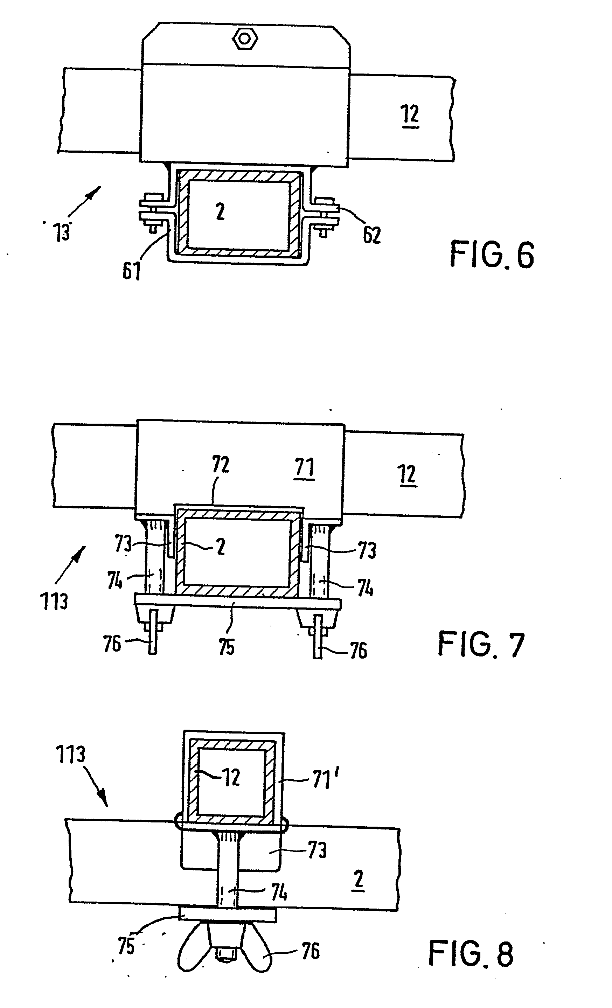

Die Figuren 4 und 5 zeigen in zwei Seitenansichten das obere Ende einer Stütze 11 mit ihrer Klaue 14. Die Klaue 14 ist innen mit einem Material ausgekleidet, das gewährleistet, daß die in die Klaue 14 eingelegte Rahmenstange 21 nicht verkratzt werden kann. Durch eine am oberen Ende der Stütze 11 bzw. an der Klaue 14 befestigte Öse 28 kann ein Riemen 30 hindurchgezogen werden, mit dem die Rahmenstange 21 in der Klaue 14 an der Stütze 11 festgezurrt werden kann. Mit 29 ist ein Sicherungsbolzen bezeichnet, der durch die beiden oberen Enden der Klaue 14 hindurchgeht. Zum Einsetzen des Fahrrades, d. h. zum Einsetzen der Rahmenstange 21 in die Klaue 14 wird der Sicherungsbolzen 29 zuvor herausgenommen. Bei dann eingesetztem Sicherungsbolzen kann die Rahmenstange 21 nicht mehr aus der Klaue 14 herausgelangen. Der Sicherungsbolzen 29 ist insbesondere für den Fall vorgesehen, der zu der speziellen Anbringung der Stange 1c nach Fig. 1 bereits erläutert worden ist, nämlich daß das Fahrrad mit seinem Vorderrad entgegen der Fahrtrichtung 4 im Halter 1 befestigt wird. Die Klaue 14 der Stütze 11 weist dann nämlich - wie schon erwähnt - in Fahrtrichtung und bei scharfem Bremsen könnte das Fahrrad mit der Rahmenstange 21 aus der Klaue herausrutschen, nämlich wenn der Sicherungsbolzen 29 nicht vorhanden ist (und der zur Öse 28 beschriebene Riemen 30 die auftretende Verzögerungskraft nicht mehr aufzunehmen vermag, oder dieser Riemen 30 vergessen worden sein sollte).

Für besondere Fälle kann auch vorgesehen sein, daß die Klaue 14 um ein geringes Maß schwenkbar an dem oberen Ende der Stütze 11 befestigt ist. Die Klaue 14 kann sich dann an eine solche Steigung der Rahmenstange 21 anpassen oder auch angepaßt werden, die von der im Regelfall vorhandenen Steigung der Rahmenstange 21 erheblich abweicht. Mit der gestrichelten Darstellung und dem Bolzen 31 ist auf diese Weiterbildung in der Fig. 4 hingewiesen.

Figur 5 zeigt auch noch das untere Ende der Stütze 11 mit der Schelle 25 und der Spannschraube 26. Man erkennt wie die im Schnitt dargestellte Stange 12 fest eingespannt ist, so daß die Stütze 11 nach keiner Seite unter den auftretenden Kräften umkippen kann.

Figur 6 zeigt eine Ausführungsform einer Doppel- bzw. Kreuzschelle 13 mit der die Stange 12 und der Querbügel 2 miteinander zu verbinden sind, und zwar in der Ansicht der Fig. 2. Durch Abnehmen des Unterteils 61 von dem mit dem übrigen Teil der Schelle verbundenen Gegenstück 62 läßt sich diese Schelle 13 öffnen, so daß der erfindungsgemäße Halter vom Querbügel 2 des Autodachträgers aufgesetzt oder abgenommen werden kann.

Die Figuren 7 und 8 zeigen zwei Ansichten aus verschiedenen Richtungen, und zwar einer besonders bevorzugten Doppelschelle 113. Bei den anstelle der Schellen 13 mit Vorteil zu verwendenden Doppelschellen 113 liegen das quadratische oder rechteckige Rohr 2 des Querbügels des Autodachträgers und das rechteckige oder quadratische Rohr 12 der Stange 12 des erfindungsgemäßen Halters aneinander und können mittels der Teile der Schelle 113 fest aneinander gepreßt werden.

Mit 71 ist ein Rohrstück bezeichnet, das auf der Stange 12 mit ausreichendem Spiel verschiebbar ist. Mit 72 ist auf einen derartigen Ausschnitt im Rohrstück 71 hingewiesen, der so bemessen ist, daß - wie aus der Figur ersichtlich - das Rohr 2 des Querbügels an dem im Rohrstück 71 befindlichen Rohr 12 der Stange anliegt. Mit 73 ist auf Führungswinkel hingewiesen, die mit dem Rohrstück 71 fest verbunden sind und deren Abstand voneinander der Breite des Rohres 2 mit geringem Spiel angepaßt ist. Mit 74 sind wenigstens zwei vorhandene Bolzen bezeichnet, auf die eine befestigt wird. Durch Anziehen der Muttern 76 wird die Traverse 75 gegen die untere Wandung des Rohres 2 gepreßt, worauf die obere Wandung des Rohres 2 gegen die untere Wandung des Rohres 12 und deren obere Wandung wiederum gegen die obere Begrenzung der ganzen Schelle 113 gedrückt wird. Durch Lösen der zwei Muttern 76 läßt sich die Stange 12 nicht nur in Querrichtung, d. h. in Längsrichtung des Querbügels 2 verschieben, sondern gleichzeitig läßt sich auch die Stange 12 in der Schelle 113 selbst verschieben. Allein das Anziehen der Muttern 76 genügt, die Stange 12 und den Querbügel 2 miteinander nach allen Richtungen hin festzulegen. Die zur Figur 7 gehörige Queransicht der Figur 8 gibt weiteren Aufschluß zur Ausführungsform einer Doppelschelle 113 ohne daß wesentliche weitere Erläuterungen notwendig sind. Abweichend von Figur 7 zeigt Figur 8 eine Ausführungsform, bei der das Teil 71' nur ein U-förmiger Winkel ist, der durch den beidseitig angeschweißten oberen waagerechten Schenkel des Teiles 73 insoweit zu einem Rohrstück vervollständigt wird.

**Patentansprüche**

1. Fahrrad-Träger der auf an einem Autodach (3) zu befestigenden Querbügeln (2) anzubringen ist, bestehend aus mindestens einem mittels Verbindungselementen (13, 113) an den Querbügeln (2) zu befestigenden Längsteil (12), einer Führung (22) für jedes Rad (17, 18) des Fahrrades (16) an dem Längsteil (12), und einer an dem Längsteil (12) zu befestigenden Stütze (11), welche sich im befestigten Zustand in einer durch das Längsteil (12) verlaufenden Ebene nach oben erstreckt und die zwischen Lenkkopf (19) und Tretlager (20) des Fahrrades (16) verlaufende Fahrrad-Rahmenstange (21) gabelförmig einfaßt, dadurch gekennzeichnet, daß die Stütze (11) an ihrem oberen Ende mit einer Klaue (14) versehen ist, die mit ihrer Öffnung in Fahrt- oder Gegenfahrtrichtung schräg nach oben gerichtet ist, derart, daß sich die erwähnte Fahrrad-Rahmenstange (21) in den Klauengrund einlegen kann, und daß an der Klaue (14) Befestigungsmittel (29, 30) zum Festhalten der Fahrrad-Rahmenstange (21) in der Klaue (14) vorgesehen sind.

2. Fahrrad-Träger nach Anspruch 1, dadurch gekennzeichnet, daß zu den Befestigungsmitteln (29, 30) zum Festhalten der Fahrrad-Rahmenstange (21) in der Klaue (14) ein Sicherungsstift (29) gehört.

3. Fahrrad-Träger nach Anspruch 1 oder 2, dadurch gekennzeichnet, daß zu den Befestigungsmitteln (29, 30) zum Festhalten der Fahrrad-Rahmenstange (21) in der Klaue (14) ein in einer Öse (28) gehaltener Riemen (30) gehört.

4. Fahrrad-Träger nach Anspruch 1, 2 oder 3, dadurch gekennzeichnet, daß die Stütze (11) an ihrem unteren Ende eine U-förmige Schelle (25) aufweist, die das Längsteil (12) umfaßt, und daß die Schelle (25) mit einer Spannschraube (26) versehen ist, mittels welcher die Schelle (25) auf dem Längsteil (12) kipp und verschiebungsfest arretierbar ist.

5. Fahrrad-Träger nach einem der Ansprüche 1 bis 4, dadurch gekennzeichnet, daß wenigstens die Führung (22) für das Hinterrad (18) oder die Führung (23) für das Vorderrad (17) auf dem Längsteil (12) in Längsrichtung verschiebbar ist.

6. Fahrrad-Träger nach einem der Ansprüche 1 bis 5, dadurch gekennzeichnet, daß bei mehreren auf den Querbügeln (2) angeordneten Längsteilen (12) und daran befestigten Stützen (11) die Klauen (14) nebeneinanderliegender Stützen (11) in entgegengesetzte Richtung weisen.

7. Fahrrad-Träger nach einem der Ansprüche 1 bis 6, dadurch gekennzeichnet, daß bei mehreren auf den Querbügeln (2) angeordneten Längsteilen (12) und daran befestigten Stützen (11) die Stützen (11) jeweils zweier nebeneinanderliegender Längsteile (12) in Längsrichtung der Längsteile (12) gegeneinander versetzt sind.

8. Fahrrad-Träger nach einem der vorhergehenden Ansprüche, dadurch gekennzeichnet, daß die Verbindungselemente zur Befestigung des Längsteiles (12) auf den Querbügeln (2) von Doppelschellen (13, 113) gebildet sind, daß jede Doppelschelle (13, 113) aus einem Rohrstück oder Bügel (71) und zwei mit diesem fest verbundenen Führungen (73) sowie wenigstens zwei Spannschrauben (74, 76) und einer Traverse (75) besteht, daß Rohrstück bzw. Bügel (71) und die Führungen (73) rechtwinklig zueinander angeordnet sind, wobei der freie Innenquerschnitt des Rohrstücks bzw. Bügels (71) für die Aufnahme des Längsteiles (12) und der freie Innenquerschnitt zwischen Rohrstück bzw. Bügel (71) und der von den Spannschrauben (74, 76) gehaltenen Traverse (75) für die Aufnahme des Querbügels (2) vorgesehen sind, und daß jede Doppelschelle (13, 113) eine solche Aussparung (72) aufweist, daß das Längsteil (12) und der Querbügel (2) im zusammengespannten Zustand der Doppelschelle (13, 113) unmittelbar aneinanderliegen.

**Claims**

1. A bicycle carrier to be attached to crossbars (2) mounted on the roof (3) of a car, consisting of at least one longitudinal member (12) to be attached to said crossbars (2) by means of connecting elements (13, 113), a guide member (22) on said longitudinal member (12) for each wheel (17, 18) of a bicycle (16), and a support member (11) to be attached to said longitudinal member (12), said support member (11) extending in its mounted condition upwardly in a plane which ranges through said longitudinal member (12) and providing a bifurcated mounting for receiving the bicycle frame bar (21), which extends between the steering head (19) and the bottom bracket bearing (20) of said bicycle (16), characterized in that said support member (11) is provided with a claw (14) at its upper end, said claw (14) having its opening directed upwardly at an angle, pointing either towards the front or the rear of the car, such that said bicycle frame bar (21) can be disposed into the base of said claw (14), and that said claw (14) is provided with fastening means (29, 30) for securing said bicycle frame bar (21) in said claw (14).

2. The bicycle carrier of claim 1, characterized in that said fastening means (29, 30) for securing the bicycle frame bar (21) in said claw (14) comprise a guard pin (29).

3. The bicycle carrier of claim 1 or 2,

characterized in

that said fastening means (29, 30) for securing said bicycle frame bar (21) in said claw (14) comprise a strap (30) held in a lug (28).

4. The bicycle carrier of claim 1, 2 or 3, characterized in

that said support member (11) comprises at its lower end a U-shaped clamp (25) which encloses said longitudinal member (12), and that said clamp (25) is provided with a straining screw (26) by which said clamp (25) is fixed on said longitudinal member (12) such that it cannot tip or slide.

5. The bicycle carrier of one of the claims 1 to 4,

characterized in

that at least the guide member (22) for the rear wheel (18) or the guide member (23) for the front wheel (17) is slidable in longitudinal direction on said longitudinal member (12).

6. The bicycle carrier of one of the claims 1 to 5,

characterized in

that said claws (14) of adjacent support members (11) will point in opposite directions, if several longitudinal members (12) having support members (11) attached thereto are arranged on said crossbars (2).

7. The bicycle carrier of one of the claims 1 to 6,

characterized in

that said support members (11) of two adjacent longitudinal members (12) are in each case displaced relative to each other in the longitudinal direction of said longitudinal members (12), if several longitudinal members (12) having support members (11) attached thereto are arranged on said crossbars (2).

8. The bicycle carrier of one of the preceeding claims,

characterized in

that the connecting elements for fastening the longitudinal member (12) on said crossbars (2) are formed by double clamps (13, 113), that each double clamp (13, 113) consists of a piece of pipe or bow (71) and two guides (73) firmly connected therewith as well as at least two straining screws (74, 76) and a tie-bar (75), that said piece of pipe or bow (71) and said guides (73) are arranged perpendicularly relative to each other, the free inner cross section of said piece of pipe or bow (71) being provided for receiving said longitudinal member (12) and the free inner cross section between said piece of pipe or bow (71) and said tie-bar (75) secured by said straining screws (74, 76) being provided for receiving said crossbar (2), and that each double clamp (13, 113) comprises a recess (72) allowing said longitudinal part (12) to be contiguous to said crossbar (2) when said double clamp (13, 113) is in tightened condition.

**Revendications**

1. Porte-vélo destiné à être monté sur des barres transversales (2) à fixer sur un toit (3) de voiture, comprenant au moins une partie longitudinale (12) à fixer à l'aide d'éléments d'assemblage (13, 113) sur les barres transversales (2), un guide (22) pour chaque roue (17, 18) du vélo (16) sur la partie longitudinale (12), et un support (11) à fixer à la partie longitudinale (12), ce support, lorsqu'il est fixé, s'étendant vers le haut dans un plan passant par partie longitudinale (12) et entourant, à la manière d'une fourche, le tube (21) du cadre de vélo s'étendant entre le tube de direction (19) et la boîte de pédalier (20) du vélo (16), caractérisé par le fait que le support (11) comporte à son extrémité supérieure une griffe (14) dont l'ouverture est dirigée de façon oblique vers le haut dans le sens de marche ou en opposition en sens marche, de manière que ledit tube (21) de cadre de vélo puisse se placer contre le fond de la griffe, et gue la griffe (14) comporte des moyens de fixation (29, 30) pour retenir le tube (21) de cadre de vélo dans la griffe (14).

2. Porte-vélo suivant la revendication 1, caractérisé par le fait que les moyens de fixation (29, 30) pour retenir le tube (21) de cadre de vélo dans la griffe (14) comprennent une goupille de sûreté (29)

3. Porte-vélo suivant la revendication 1 ou 2, caractérisé par le fair que les moyens de fixation (29, 30) pour retenir le tube (21) de cadre de vélo dans la griffe (14) comprend une courroie (30) maintenue dans une boucle (28)

4. Porte-vélo suivant la revendication 1, 2 ou 3, caractérisé par le fait que le support (11) comporte à son extrémité inférieure un collier (25) en forme de U qui entoire la partie longitudinale (12), et que le collier (25) est muni d'une vis de serrage (26) à l'aide de laquelle le collier (25) peut être bloqué en pivotement en translation sur la partie longitudinale (12).

5. Porte-vélo suivant l'une quelconque des revendications 1 à 4, caractérisé par le fait qu'au moins le guide (22) pour la roue arrière (18) ou le guide (23) pour la roue avant (17) est déplaçable en direction longitudinale sur la partie londitudinale (12).

6. Porte-vélo suivant l'une des revendications 1 à 5, caractérisé par le fait que dans le cas d'une pliralité de parties longitudinales (12) disposées sur les barres transversales (2), et de supports (11) fixés sur ces parties longitudinales, les griffes (14) des supports (11) voisins sont orientées dans des sens opposés.

7. Porte-vélo suivant l'une des revendications 1 à 6, caractérisé par le fait que dans le cas d'une pluralité de parties longitudinales (12) disposées sur les barres tranversales (2), et de supports (11) fixée à ces parties longitudinales, les supports (11) de chaque fois deux parties longitudinales (12) voisines sont décalés l'un par rapport à l'autre dans la direction longitudinale des parties longitudinales (12).

8. Porte-vélo suivant l'une des revendications précédentes, catactérisé par le fait que les éléments d'assemblage pour fixer la partie longitudinale (12) sur les barres transversales (2) sont constitués par des colliers doubles (13, 113), que chaque collier double (13, 113) est composé d'un tronçon de tube ou étrier (71), de deux guides (73) fixés à ce dernier, d'au moins deux vis de setrage (74, 76) et d'une traverse (75), que le tronçon de tube ou étrier (71) et les guides (73) sont disposés à angle droit l'un far rapport aux autres, la section intérieure libre du tronçon de tube ou étrier (71) étant prévue pour recevoir la partie lonitudinale (12) et la section intérieure libre entre le tronçon tube ou étrier (71) et la traverse (75) maintenue par les vis de serrage (74, 76) étant prévue pour recevoir la barre transversale (2), et que chaque collier double (13, 113) comporte un évidement (72) tel que la partie longitudinale (12) et la barre transversale (2) se trouvent en contact direct l'une sur l'autre à l'état serré du collier double (13, 113).

FIG. 1

FIG. 4

FIG. 5

FIG. 2

FIG. 3

FIG. 6

FIG. 7

FIG. 8